Europäisches Patentamt

(19) European Patent Office

Office européen des brevets

(11) **EP 0 616 429 B1**

(12) **EUROPÄISCHE PATENTSCHRIFT**

(45) Veröffentlichungstag und Bekanntmachung des Hinweises auf die Patenterteilung:
**31.03.2004   Patentblatt 2004/14**

(51) Int Cl.7: **H03K 3/84**, G06F 7/58, H04L 9/22

(21) Anmeldenummer: **94100237.0**

(22) Anmeldetag: **10.01.1994**

(54) **Verfahren und Schaltungsanordnung zum Erzeugen einer Pseudozufallsfolge sowie deren Verwendung**

Method and circuit for generating a pseudo-random sequence and its use

Procédé et circuit pour générer d'une séquence pseudo-aléatoire et leur utilisation

(84) Benannte Vertragsstaaten:
**DE FR GB GR IT**

(30) Priorität: **19.01.1993   DE 4301279**

(43) Veröffentlichungstag der Anmeldung:
**21.09.1994   Patentblatt 1994/38**

(73) Patentinhaber: **Infineon Technologies AG**
**81669 München (DE)**

(72) Erfinder:
• **Hess, Erwin, Dr. rer. nat.**
**D-85521 Ottobrunn (DE)**
• **Schrenk, Hartmut, Dr. rer. nat.**
**D-85540 Haar (DE)**
• **Eberhard, Günther, Dipl.-Phys.**
**D-82223 Eichenau (DE)**
• **Rueppel, Rainer, Dr.**
**CH-8623 Wetzikon (CH)**

(74) Vertreter: **Epping Hermann & Fischer**
**Ridlerstrasse 55**
**80339 München (DE)**

(56) Entgegenhaltungen:
EP-A- 0 147 716          US-A- 4 202 051
US-A- 5 060 265

• **ADVANCES IN CRYPTOLOGY - AUSCRYPT '90, INTERNATIONAL CONFERENCE ON CRYPTOLOGY. PROCEEDINGS, SYDNEY, NSW, AU, 8-11 JAN. 1990 Seite 32-36 GONG GUANG: 'Nonlinear generators of binary sequences with controllable complexity and double key'**

**Beschreibung**

Die Erfindung betrifft ein Verfahren und einer Schaltungsanordnung zum Erzeugen einer Pseudozufallsfolge von Bitdaten aus den Ausgangsdaten einer rückgekoppelten Schieberegistereinrichtung durch gesteuerte Ausblendung von Bits der Ausgangsdaten, wobei die Steuerung der Ausblendung ausschließlich durch den Schaltzustand von Schieberegisterzellen der Schieberegistereinrichtung über eine nicht-lineare Funktion beeinflußt wird.

Die US 5,060,265 offenbart ein solches Verfahren und eine solche Schaltungsanordnung. Die nicht-lineare Funktion besteht dort aus einem EX-OR-Gatter, dessen Ausgangssignal die Adresse für einen RAM-Speicher bildet.-Dessen jeweils adressierter Inhalt wird mit dem Inhalt eines auszuwählenden Registers mittels eines Komparators verglichen, dessen Ausgangssignal das Ausgangssignal der nicht-linearen Funktion bildet. Dem EXOR-Gatter wird einerseits ebenfalls der Inhalt des ausgewählten Registers und andererseits der Inhalt des rückgekoppelten Schieberegisters zugeführt. zur Auswahl eines für einen jeweiligen Vergleichsvorgang vorgesehenen Registers ist jedoch ein weiteres Adreßsignal nötig, das von außerhalb der Schaltungsanordnung stammt. Hierdurch ist jedoch eine Einflußnahme in den Rechenvorgang von außen und damit eine Manipulationsmöglichkeit gegeben.

Pseudozufallsfolgen bzw. pseudozufällige Binärfolgen werden vielfach zur Untersuchung von analogen und digitalen Systemen eingesetzt. Darüber hinaus spielen Pseudozufallsfolgen eine bedeutende Rolle bei der Verschlüsselung von Daten.

Es sind zahlreiche Schaltungsanordnungen bekannt, solche Pseudozufallsfolgen von Bitdaten zu erzeugen. In dem Buch Tietze, Schenk "Halbleiter-Schaltungstechnik", 5. Auflage sind auf den Seiten 509 bis 512 Schaltungsanordnungen beschrieben, um solche Pseudozufallsfolgen zu erzeugen. Zur Erzeugung von Pseudozufallsfolgen verwendet man üblicherweise Schieberegister, die in bestimmter Weise rückgekoppelt sind. Die Rückkopplung wird dabei aus Exklusiv-ODER-Schaltungen zusammengesetzt. Die größte nicht periodische Bitfolge, die ein Schieberegister mit n Stufen erzeugen kann, ist $N = 2^n-1$ Bit lang. So kann mit einem vierstufigen Schieberegister beispielsweise eine Pseudozufallsfolge mit einer maximalen Periodenlänge von 15 Bit erzeugt werden. Eine dafür geeignete Schaltung ist in Abbildung 20.23 der genannten Literaturstelle zu sehen.

Beim Verschlüsseln von Daten wird dagegen die rückgekoppelte Schieberegistereinrichtung mit einer Schlüsselinformation, d.h. ein geheimes Datenwort, beaufschlagt. Mit diesem Datenwort wird festgelegt, an welcher Stelle der Pseudozufallsfolge am Ausgang der rückgekoppelten Schieberegistereinrichtung der Datenstrom der Pseudozufallsfolge beginnt.

Befindet sich beispielsweise in einer tragbaren Datenträgeranordnung, wie z.B. einer Chipkarte, und in einer mit dieser zusammenarbeitenden Datenein-/ausgabeeinrichtung jeweils ein gleiches rückgekoppeltes Schieberegister, und ist der gleiche Schlüssel auf beiden Seiten bekannt, so können die von der einen Datenträgeranordnung zur Datenein/ausgabeeinrichtung verschlüsselt gesendeten Daten wieder entschlüsselt bzw. ein zwischen beiden Seiten ausgetauschter Datenstrom gleichermaßen verschlüsselt und die verschlüsselten Daten verglichen werden. Damit ist unter anderem ein Echtheitsnachweis der Chipkarte möglich und ein gewisser Schutz vor Fälschungen bzw. Mißbrauch sichergestellt.

Bisherige Verfahren und Konzepte zur Sicherung solcher Datenträgeranordnung verwenden anstelle einer strengen Echtheitsprüfung zur Ausschaltung von Fälschungen und Mißbrauch die Überprüfung eines durch Nachbauten oder Emulationen nur sehr schwer realisierbaren charakteristischen Merkmals. Bekannt ist darüber hinaus auch die Überprüfung der Gültigkeit der gespeicherten Daten über den Zusatz eines mit dem oben bereits erwähnten geheimen Schlüssel in einer Datenträgeranordnung erzeugten Codes für einen Echtheitsnachweis des Dateninhalts.

Problematisch ist bei diesem bekannten Verfahren, daß die Kontrollsignale abgehört bzw. am Ein/Ausgang der Datenträgeranordnung, beispielsweise der Chipkarte, abgegriffen werden können, wodurch ein Wiedereinspielen der Kontrollinformation zur Fälschungszwecken möglich ist.

Bei elektronischen Schaltungen mit Mikroprozessorarchitektur wird dieser Nachteil durch Einsatz eines kryptografischen Authentifikations- oder Identifikationsvorganges nach dem Prinzip der herausfordernden Frage und dazu passenden Antwort (Challenge und Response-Prinzip) bzw. mit Zero-Knowledge-Protokoll ausgeschaltet.

Dieses Challenge-Response-Prinzip sieht beispielsweise bei einer Chipkarte und einer Datenein-/ausgabeeinrichtung zum Lesen dieser Chipkarte vor, daß zunächst die Datenein-/ausgabeeinrichtung Daten "Challenge" generiert und diese zur Chipkarte sendet. Dort dient diese "Challenge" zur Berechnung einer sogenannten "Response". Diese "Response" wird mittels eines Algorithmusses zum Echtheitsnachweis berechnet und hängt zweckmäßigerweise von weiteren Daten, dem geheimen Kartenschlüssel und z.B. einer weiteren Größe, wie einem internen Zählerstand, ab. Die von der Chipkarte zur Datenein-/ausgabeeinrichtung gesendete "Response" wird in der Datenein-/ausgabeeinrichtung mit dort vorliegenden Daten verglichen. Diese dort vorliegenden Daten werden mit dem gleichen Algorithmus, dem gleichen geheimen Kartenschlüssel, der Challenge und der Zusatzinformation berechnet. Stimmt die Response mit dieser Berechnung überein, so ist die Chipkarte als gültig erkannt. Andernfalls erfolgt ein Abbruch der Datenverbindung zwischen Chipkarte und Datenein-/ausgabeinrichtung.

Die eingangs erwähnte rückgekoppelte Schieberegistereinrichtung wird bei diesen bekannten Systemen dazu verwendet, den geheimzuhaltenden Kartenschlüssel in eine längere Pseudozufallsfolge, eine sogenannte Schlüsselstromfolge, zu transformieren. Bei Vorgabe beliebiger Teile der Schlüsselstromfolge muß es einem Angreifer, der den Kartenschlüssel unbefugter Weise berechnen will, unmöglich sein, weitere Teile der Schlüsselstromfolge vorherzusagen. Dies impliziert, daß es ebenfalls unmöglich sein muß, auf den Schlüssel zurückzurechnen. Die bisher bekannten rückgekoppelten Schieberegistereinrichtungen gewähren hierfür bereits einen guten Schutz, sofern die Schieberegistereinrichtung hinreichend lang ist, z.B. 50 hintereinander geschaltete Schieberegisterzellen aufweist. Es besteht jedoch ein Bestreben dahin, diese bekannten Verfahren mit geringstmöglichen Aufwand noch besser zu sichern. Hier setzt die Erfindung an.

Der Erfindung liegt die Aufgabe zugrunde, ein Verfahren zum Erzeugen einer Pseudozufallsfolge von Bitdaten unter Verwendung einer rückgekoppelten Schieberegistereinrichtung sowie eine Schaltungsanordnung zur Durchführung des Verfahrens anzugeben, das gegenüber dem bisher bekannten Verfahren und Schaltungsanordnungen eine höhere Sicherheit aufweist. Darüber hinaus soll eine geeignete Verwendung für dieses Verfahren und diese Schaltungsanordnung aufgezeigt werden.

Diese Aufgabe wird für ein gattungsgemäßes Verfahren dadurch gelöst, daß die Steuerung der Ausblendung ausschließlich durch den Schaltzustand von vorgegebenen Schieberegisterzellen der Schieberegistereinrichtung über eine nicht-lineare logische Funktion beeinflußt wird.

Die Aufgabe wird für eine gattungsgemäße Schaltungsanordnung dadurch gelöst, daß ausschließlich die vorgegebenen Schieberegisterzellen der Schieberegistereinrichtung mit dem Eingang der nichtlinearen Funktion verbunden sind.

In einer vorteilhaften Weiterbildung der erfindungsgemäßen Schaltungsanordnung ist vorgesehen, daß die eine nichtlineare logische Funktion realisierende Schaltung logische UND- und logische ODER-Gatte aufweist. Darüber hinaus kann die Schalteinrichtung selbst ein logisches Gatter, beispielsweise ein UND-Gatter sein, das an einer ersten Eingangsklemme mit einem Ausgang der Schieberegistereinrichtung und mit einer Eingangsklemme mit einer Ausgangsklemme der die nichtlineare logische Funktion realisierenden Schaltung verbunden ist. Am Ausgang dieses UND-Gatters ist dann die Pseudozufallsfolge abgreifbar. Je nachdem, ob die Schalteinrichtung ein- oder ausgeschaltet ist, gelangen demnach die von der rückgekoppelten Schieberegistereinrichtung erzeugten Bitdaten an den Ausgang der erfindungsgemäßen Schaltungsanordnung. So lange die Schalteinrichtung ausgeschaltet ist, gelangen dagegen keine Daten an die Ausgangsklemme der erfindungsgemäßen Schaltungsanordnung. Um eine solche Datenlücke zu vermeiden, kann vorgesehen werden, daß ausgangsseitig an die erfindungsgemäße Schaltungsanordnung ein Zwischenspeicher geschaltet wird, welches mit fortlaufendem Takt ausgelesen wird.

Gemäß der Erfindung wird das Verfahren oder die Schaltungsanordnung zur Verschlüsselung bzw. Entschlüsselung von Daten und/oder in einer Datenträgeranordnung, insbesondere Chipkarten mit integrierten Schaltungsanordnungen, zu deren Echtheitserkennung eingesetzt.

Die Erfindung wird im folgenden anhand eines Ausführungsbeispieles in Zusammenhang mit einer Figur näher erläutert.

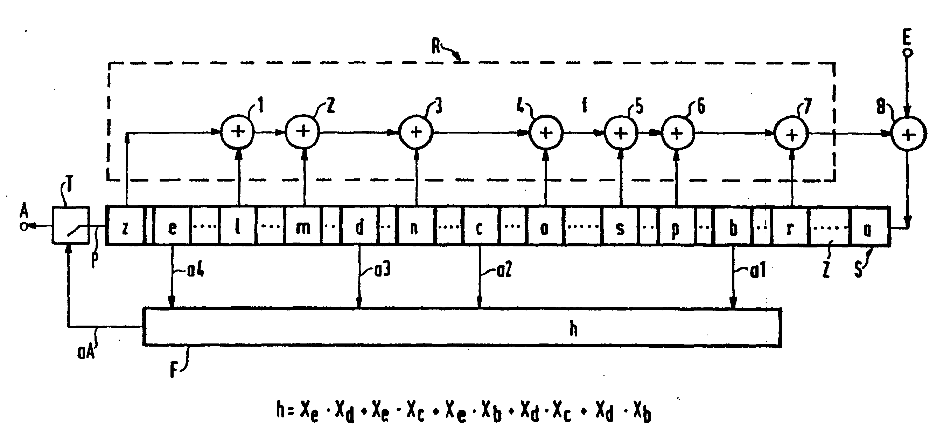

Die erfindungsgemäße Schaltungsanordnung sieht eine rückgekoppelte Schieberegistereinrichtung vor, welche eine Vielzahl von hintereinander geschaltete Schieberegisterzellen a...z aufweist. Die eingangsseitige Schieberegisterzelle ist mit dem Bezugszeichen a und die ausgangsseitige Schieberegisterzelle mit dem Bezugszeichen z bezeichnet. Diese hintereinander geschalteten Schieberegisterzellen a...z sind über eine EXOR-Gatter 1 bis 7 enthaltene Rückkopplungsschaltung R rückgekoppelt. Hierfür sind in dem in der Figur 1 gezeigten Ausführungsbeispiel sieben EXOR-Gatter 1 bis 7 in der Rückkopplungseinrichtung R vorgesehen. Diese EXOR-Gatter 1 bis 7 weisen jeweils zwei Eingangsklemmen und eine Ausgangsklemme auf, wobei ein erstes EXOR-Gatter 1 mit einem Ausgangssignal der letzten Schieberegisterzelle z und mit einem Ausgangssignal der Schieberegisterzelle 1 beaufschlagt ist. Die Ausgangsklemme des EXOR-Gatters 1 ist mit einer Eingangsklemme des zweiten EXOR-Gatters 2 in Verbindung, deren andere Eingangsklemme an den Ausgang einer mit m bezeichneten Schieberegisterzelle verbunden ist. In dem in der Figur dargestellten Ausführungsbeispiel sind die weiteren EXOR-Gatter 3, 4, 5, 6 und 7 derart verschaltet, daß dem EXOR-Gatter 3 das Ausgangssignal des EXOR-Gatters 2 und das Ausgangssignal einer Schieberegisterzelle n, dem EXOR-Gatter 4 das Ausgangssignal des EXOR-Gatters 3 und ein Ausgangssignal einer Schieberegisterzelle o, das Ausgangssignal des EXOR-Gatters 4 und ein Ausgangssignal der Schieberegisterzelle s dem EXOR-Gatter 5 zugeführt wird, daß das Ausgangssignal des EXOR-Gatters 5 und ein Ausgangssignal der mit p bezeichneten Schieberegisterzelle dem EXOR-Gatter 6 zugeleitet wird, und dessen Ausgangssignal und ein Ausgangssignal einer Schieberegisterzelle r dem EXOR-Gatter 7 zugeführt wird. Das mit dem Bezugszeichen 8 bezeichnete EXOR-Gatter erhält einerseits das Ausgangssignal des EXOR-Gatter 7 und andererseits ein Eingangssignal E, das unter anderem den geheimzuhaltenden Schlüssel repräsentiert. Ausgangsseitig ist dieses EXOR-Gatter 8 mit einem Eingang der ersten Schieberegisterzelle a der Schieberegistereinrichtung verbunden.

Dieses Eingangssignal E kann beispielsweise aus einer Geheiminformation, einer Zufallszahl als Challenge und gegebenenfalls einer Zusatzinformation (z.B. ein Datenspeicherinhalt) gewonnen werden. Die erfindungsgemäße Schaltungsanordnung ist nicht auf das in der Figur dargestellte EXOR-Gatter 8 beschränkt. Vielmehr kann dieses EXOR-Gatter 8 durch eine beliebige Verknüpfungslogik ersetzt sein.

Erfindungsgemäß ist an den Ausgang der rückgekoppelten Schieberegistereinrichtung eine Schalteinrichtung T geschaltet, die abhängig von einem Steuersignal aA die am Ausgang der letzten Schieberegisterzelle z anstehende Pseudozufallsfolge P von Bitdaten an eine Ausgangsklemme A durchschaltet oder nicht. Das Steuersignal aA wird erfindungsgemäß durch eine eine nichtlineare logische Funktion h realisierende Schaltung F erzeugt, welche in Abhängigkeit eines oder mehrerer Schaltzustande der Schieberegistereinrichtung S festlegt, ob die Schalteinrichtung T die an ihrem Eingang anstehende Pseudozufallsfolge P an die Ausgangsklemme A schaltet oder nicht. Hierfür ist die.Schaltung F eingangsseitig mit Ausgängen von vorgegebenen Schieberegisterzellen verbunden. In diesem Ausführungsbeispiel ist angenommen, daß Ausgänge von vier Schieberegisterzellen nämlich der Schieberegisterzellen b, c, d und e über Verbindungsleitungen a1, a2, a3, a4 mit der Schaltung F in Verbindung stehen. Die nichtlineare logische Funktion h besteht beispielsweise aus einer Kombination von UND- und ODER-Gattern folgender Art:

$$h = X_e \cdot X_d + X_e \cdot X_c + X_e - X_b + X_d \cdot X_c + X_d \cdot X_b.$$

Vorzugsweise werden die Abgriffe der die nichtlineare logische Funktion darstellenden Schaltung F an der Schieberegistereinrichtung nicht als nebeneinander liegende Blöcke gewählt. Es empfiehlt sich, diese Abgriffe zufällig und nicht übereinanderliegend zu wählen. Das gleiche gilt für die Rückkopplungsabgriffe zu den EXOR-Gattern 1 bis 7.

Die Arbeitsweise dieser erfindungsgemäßen Schaltungsanordnung ist folgende. Nach einer definierten Voreinstellung des Schieberegisterzustandes wird das Eingangssignal E, welches wie bereits erwähnt aus einer Geheiminformation, einer Zufallszahl und gegebenenfalls einer Zufallsinformation bestehen kann, in die rückgekoppelte Schieberegistereinrichtung S eingegeben. Diese Eingabe wird über eine Verknüpfungslogik, hier das EXOR-Gatter 8 mit der Rückkopplungsinformation am Ausgang des letzten EXOR-Gatters 7 verknüpft. Die Ausgabe eines Datenwortes zur Echtheitserkennung an der Ausgangsklemme A der erfindungsgemäßen Schaltungsanordnung wird durch die nichtlineare logische Funktion h der Schaltung F gesteuert. Diese wird aus der laufenden Pseudozufallsfolge P am Ausgang der letzten Schieberegisterzelle z ausgeblendet. Eine überprüfende Stelle kann dann in Kenntnis der Information E, d.h. also der Geheiminformation, der Zufallszahl und der gegebenenfalls vorhanden Zusatzinformation den gleichen Vorgang nachvollziehen. Bei Gleichheit ist die Echtheit festgestellt.

Die definierte Voreinstellung der Schieberegistereinrichtung S kann beispielsweise mit Unterbrechung der Rückkopplung über die Eingabe des Eingangssignales E, vorzugsweise der Geheiminformation erfolgen. Die Reihenfolge der Eingabe nach einer Voreinstellung kann beliebig erfolgen. Die Sperrung der Ausgabe ist erfindungsgemäß zweckmäßigerweise so gewählt, daß eine für die Sicherheit ausreichende Nichtkorrelation zur Eingabe, insbesondere der Geheimzahl, gewährleistet wird. Vor der Eingabe und/oder zwischen den Eingaben des Eingangssignales E, können mehrere Taktzyklen dazwischengeschaltet werden. Eine längere Taktzyklusphase kann darüber hinaus der eigentlichen an der Ausgangsklemme A anstehenden Pseudozufallsfolge vorgeschaltet werden.

Es hat sich als zweckmäßig erwiesen, die Ausgabe aus dem Schieberegister entsprechend der nichtlinearen Ausgabefunktion in ein Zwischenregister zu schreiben, welches mit fortlaufendem Takt ausgelesen wird. Damit ist der Vorteil ereicht, daß eine kontinuierliche Datenfolge am Ausgang der erfindungsgemäßen Schaltungsanordnung abgreifbar ist, ohne daß die sonst bei der erfindungsgemäßen Schaltungsanordnung zwangsweise sich ergebenden Datenlücken auftreten. Darüber hinaus kann die Echtheitsprüfung nach jeder Änderung des Zustandes der zu überprüfenden Schaltung wiederholt werden. Im übrigen kann die Echtheitsprüfung zwischen zwei Schaltungen gegenseitig durch Austausch entsprechender Pseudozufallsfolgen vorgesehen werden.

Mit der erfindungsgemäßen Schaltungsanordnung und dem erfindungsgemäßen Verfahren ist es also möglich, mit Hilfe der rückgekoppelten Schieberegistereinrichtung und der nichtlinearen Verknüpfungsfunktion h eine Datenfolge zu erzeugen, die aus der Pseudozufallsfolge P am Ausgang der letzten Schieberegisterzelle z der Schieberegistereinrichtung S mit Hilfe der nichtlinearen Verknüpfungsfunktion h eine weitere Zahlenfolge durch Auswahl abgeleitet wird. Für die so erzeugte Folge muß über die Wahl der Rückkopplungsfunktion und der nichtlinearen Verknüpfungsfunktion erfindungsgemäß sichergestellt sein, daß eine Voraussagbarkeit des Signales an der Ausgangsklemme A nach praktischem Ermessen unmöglich wird.

**Patentansprüche**

1.   Verfahren zum Erzeugen einer Pseudozufallsfolge von Bitdaten (A) aus den Ausgangsdaten (P) einer rückgekoppelten Schieberegistereinrichtung (R, S) durch gesteuerte Ausblendung von Bits der Ausgangsdaten (P) wobei die Steuerung der Ausblendung ausschließlich durch den Schaltzustand von vorgegebenen Schieberegisterzellen (b, c, d, e) der Schieberegistereinrichtung (R, S) über eine nicht-lineare logische Funktion beeinflußt wird.

2. Schaltungsanordnung zur Durchführung des Verfahrens nach Anspruch 1, bei der eine ausgangsseitig eine Schalteinrichtung (T) aufweisende rückgekoppelte Schieberegistereinrichtung (S, R) eine Vielzahl hintereinander geschalteter Schieberegisterzellen (a...z) enthält, und bei der vorgegebene Schieberegisterzellen (b, c, d, e) ausgangsseitig mit einer eine nichtlineare logische Funktion (h) realisierenden Schaltung (F) verbunden sind, welche ausgangsseitig mit der Schalteinrichtung (T) zu deren Steuerung in Verbindung steht.
**dadurch gekennzeichnet,**
**daß** ausschließlich die vorgegebenen Schieberegisterzellen (b, c, d, e) der Schieberegistereinrichtung mit dem Eingang der nichtlinearen Funktion (h) verbunden sind.

3. Schaltungsanordnung nach Anspruch 2,
**dadurch gekennzeichnet, daß** die eine nichtlineare logische Funktion (h) realisierende Schaltung logische UND- und logische ODER-Gatter aufweist.

4. Schaltungsanordnung nach Anspruch 2 oder 3,
**dadurch gekennzeichnet, daß** die Schalteinrichtung (T) ein Logikgatter ist.

5. Schaltungsanordnung nach einem der Ansprüche 2 bis 4,
**dadurch gekennzeichnet, daß** an die Schalteinrichtung (T) ausgangsseitig eine Puffereinrichtung zum kontinuierlichen Ausgeben der Pseudozufallsfolge mit Daten vorgesehen ist.

6. Verwendung des Verfahrens nach Anspruch 1 oder der Schaltungsanordnung nach einem der Ansprüche 2 bis 5 in einer Datenträgeranordnung, insbesondere einer Chipkarte mit einer integrierten Schaltungsanordnung, zur Echtheitserkennung.

7. Verwendung des Verfahrens nach Anspruch 1 oder der Schaltungsanordnung nach einem der Ansprüche 2 bis 5 zum Verschlüsseln von Daten.

## Claims

1. Method for generating a pseudo-random sequence of bit data (A) from the output data (P) of a feedback shift register device (R, S) by controlled masking out of bits of the output data (P), the control of the masking out being influenced exclusively by the switching state of predetermined shift register cells (b, c, d, e) of the shift register device (R, S) by means of a non-linear logical function.

2. Circuit arrangement for carrying out the method according to Claim 1, in which a feedback shift register device (S, R) having a switching device (T) on the output side contains a multiplicity of cascaded shift register cells (a...z), and in which predetermined shift register cells (b, c, d, e) are connected, on the output side, to a circuit (F) which realizes a non-linear logical function (h) and which, on the output side, is connected to the switching device (T) for the control thereof,
**characterized**
**in that** exclusively the predetermined shift register cells (b, c, d, e) of the shift register device are connected to the input of the non-linear function (h).

3. Circuit arrangement according to Claim 2,
**characterized in that** the circuit which realizes a non-linear logical function (h) has logic AND and OR gates.

4. Circuit arrangement according to Claim 2 or 3,
**characterized in that** the switching device (T) is a logic gate.

5. Circuit arrangement according to one of Claims 2 to 4,
**characterized in that** a buffer device for continuously outputting the pseudo-random sequence with data is provided at the switching device (T) on the output side.

6. Use of the method according to Claim 1 or of the circuit arrangement according to one of Claims 2 to 5 in a data carrier arrangement, in particular a smart card with an integrated circuit arrangement, for identifying authenticity.

7. Use of the method according to Claim 1 or of the circuit arrangement according to one of Claims 2 to 5 for the encryption of data.

## Revendications

1. Procédé pour produire une séquence pseudo-aléatoire de données (A) binaires à partir des données (P) de sortie d'un dispositif (R, S) à registre de décalage à boucle fermée par extraction commandée de bits des données (P) de sortie, la commande de l'extraction étant influencée exclusivement par l'état de commutation de cellules (b, c, d, e) de registre à décalage prescrites du dispositif (R, S) à registre de décalage par l'intermédiaire d'une fonction logique non linéaire.

2. Circuit pour la mise en oeuvre du procédé suivant la revendication 1, dans lequel un dispositif (S, R) de registre à décalage à boucle fermée comportant du côté de la sortie un dispositif (T) de commutation contient une pluralité de cellules (a.....z) de registre de décalage branchées les unes derrière les autres, et dans lequel des cellules (b, c, d, e) de registre à décalage prescrites sont reliées du côté de la sortie à un circuit (F) réalisant une fonction (h) logique non linéaire, le circuit (F) étant du côté de la sortie en liaison avec le dispositif (T) de commutation pour la commande de celui-ci, **caractérisé en ce que**
exclusivement les cellules (b, c, d, e) du dispositif de registre à décalage prescrites sont reliées à l'entrée de la fonction (h) non linéaire.

3. Circuit suivant la revendication 2, **caractérisé en ce que** le circuit réalisant la fonction (h) logique non linéaire comporte une porte OU logique et une porte ET logique.

4. Circuit suivant la revendication 2 ou 3, **caractérisé en ce que** le dispositif (T) de commutation est une porte logique.

5. Circuit suivant l'une des revendications 2 à 4, **caractérisé en ce qu'**il est prévu sur le dispositif (T) de commutation, du côté de sortie, un dispositif tampon pour la fourniture en continu de données à la séquence pseudo-aléatoire.

6. Utilisation du procédé suivant la revendication 1 ou du circuit suivant l'une des revendications 2 à 5, dans un dispositif de support de données, notamment une carte à puces ayant un circuit intégré, pour une reconnaissance en temps réel.

7. Utilisation du procédé suivant la revendication 1 ou du circuit suivant l'une des revendications 2 à 5, pour le codage de données.

$$h = X_e \cdot X_d \cdot X_e \cdot X_c \cdot X_e \cdot X_b \cdot X_d \cdot X_c \cdot X_d \cdot X_b$$